# DEMANDE DE BREVET EUROPEEN

(11) **EP 1 591 642 A1**
(43) Date de publication de la demande: **02.11.2005**
(21) Numéro de dépôt: 05300280.4
(22) Date de dépôt: 14.04.2005
(51) Int. Cl.: F02B 31/08, F02F 1/42

(54) **Circuit d'admission comportant un orifice muni d'une entaille pour conférer un mouvement tourbillonnaire aux gaz admis**

(30) Priorité: 22.04.2004 FR 0404262
(71) Demandeur: Renault s.a.s., 92100 Boulogne Billancourt (FR)
(72) Inventeur: Dupont, Alain, 78860, Saint Nom La Breteche (FR)

(57) **Abrégé**

L'invention concerne un système d'admission de gaz dans une chambre de combustion (22) cylindrique d'axe vertical (A1) d'un moteur à combustion, comportant un premier conduit (26) d'admission des gaz qui débouche dans la chambre de combustion (22) par un premier orifice d'admission (30) et qui est conformé pour que le flux de gaz admis forme un mouvement tourbillonnaire (S) dans la chambre de combustion (22), et comportant un second conduit d'admission (28) qui débouche dans la chambre de combustion (22) par un second orifice d'admission (32) et qui est conformé pour que le flux de gaz débouche selon une direction sensiblement radiale dans la chambre de combustion (22), chacun des orifices d'admission (30, 32) étant susceptibles d'être obturés par une soupape (34, 36), caractérisé en ce que le degré d'ouverture extrême de la seconde soupape (36) est commandé, et en ce que le pourtour (46) du second orifice d'admission (32) comporte un secteur angulaire entaillé (66) qui s'étend sur un arc selon la direction tangente au mouvement tourbillonnaire (S).

## Description

L'invention concerne un système d'admission de gaz dans au moins une chambre de combustion d'un moteur à combustion.

L'invention concerne un système d'admission de gaz dans une chambre de combustion cylindrique d'axe d'un moteur à combustion, qui comporte un premier conduit d'admission des gaz qui débouche dans la chambre de combustion par un premier orifice d'admission excentré par rapport à l'axe de sorte que le flux de gaz admis forme un mouvement tourbillonnaire autour de l'axe de la chambre de combustion, qui comporte un second conduit d'admission qui débouche dans la chambre de combustion à travers un second orifice d'admission excentré de sorte que le flux de gaz débouche selon une direction sensiblement radiale dans la chambre de combustion, chacun des premier et second orifices d'admission étant susceptibles d'être obturés par une première et une seconde soupapes.

Pour satisfaire les normes qui définissent la valeur maximale des émissions polluantes et réduire la consommation spécifique des moteurs, il est nécessaire de maîtriser les paramètres de la combustion.

Dans les moteurs à combustion interne, qu'il s'agisse des moteurs à essence ou surtout des moteurs Diesel à injection directe, il est nécessaire, pour assurer un mélange correct entre l'air et le carburant dans le cylindre, de conférer à l'air un mouvement tourbillonnaire de rotation dans la chambre de combustion.

Ce mouvement de rotation autour d'un axe parallèle à l'axe du cylindre, est caractérisé par le rapport entre la vitesse de rotation de l'air dans le cylindre et la vitesse de rotation du moteur. On appelle ce rapport « rapport de tourbillonnement » ou plus généralement « swirl ». Dans un moteur Diesel à injection directe, un tel rapport de tourbillonnement ou swirl, nécessaire au moment de la phase d'injection, est particulièrement souhaité pour le fonctionnement du moteur à faible charge.

On définit en outre la perméabilité dans un cylindre de moteur à combustion, en particulier de moteur Diesel, comme étant le rapport de la section effective de passage dégagée par la soupape d'admission divisée par la section transversale du cylindre. La perméabilité caractérise le débit d'air admis dans le cylindre.

L'invention vise à proposer un moteur à combustion interne qui permette à la fois de faire varier la valeur des paramètres du mouvement aérodynamique dans la chambre au point mort haut de la course du piston associé et de faciliter l'agencement des éléments périphériques du moteur sur la culasse.

L'invention vise à satisfaire à ces exigences de manière simple et économique.

Dans ce but, l'invention propose un moteur du type décrit précédemment, caractérisé en ce que le degré d'ouverture d'au moins une soupape est commandé en fonction de paramètres de fonctionnement du moteur, et en ce que le pourtour de l'orifice d'admission associé à ladite soupape comporte un secteur angulaire entaillé qui s'étend sur un arc selon la direction tangente au mouvement tourbillonnaire de manière que ladite portion du flux de gaz soit orientée tangentiellement au mouvement tourbillonnaire.

Selon d'autres caractéristiques de l'invention :
- au moins sur une première partie de la course d'ouverture de la soupape, la portion du flux de gaz orientée tangentiellement est inversement proportionnelle au degré d'ouverture extrême de la seconde soupape ;
- le premier orifice d'admission est situé en aval du second orifice d'admission selon le sens de rotation du mouvement tourbillonnaire des gaz ;
- le degré d'ouverture de la première soupape est commandé en fonction de paramètres de fonctionnement du moteur, et en ce que le pourtour du premier orifice d'admission comporte un secteur angulaire entaillé qui s'étend sur un arc selon la direction tangente au mouvement tourbillonnaire de manière à favoriser le mouvement tourbillonnaire des gaz admis ;
- le secteur angulaire sur lequel le pourtour du premier orifice d'admission est entaillé est sensiblement égal à la moitié du pourtour dudit orifice ;
- le secteur angulaire sur lequel le pourtour du second orifice d'admission est entaillé est sensiblement égal à la moitié du pourtour dudit orifice.

D'autres caractéristiques et avantages apparaîtront au cours de la lecture de la description détaillée qui va suivre pour la compréhension de laquelle on se reportera aux dessins en annexe parmi lesquels :
- la figure 1 est une vue en section axiale qui représente un cylindre coiffé d'une culasse qui est équipée d'un système d'admission réalisé selon les enseignements de l'invention ;
- la figure 2 est une vue en plan de dessous de la face inférieure de la culasse représentée à la figure 1 qui comporte deux orifices d'admission ;
- la figure 3 est une vue en section axiale d'un orifice d'admission qui est réalisé selon les enseignements de l'invention et qui est obturé par une soupape en position d'obturation ;
- la figure 4 est une vue similaire à celle de la figure 3 dans laquelle la soupape est représentée en position maximale d'ouverture ;
- la figure 5 est une vue similaire à celle de la figure 3 dans laquelle la soupape est représentée en position intermédiaire d'ouverture.

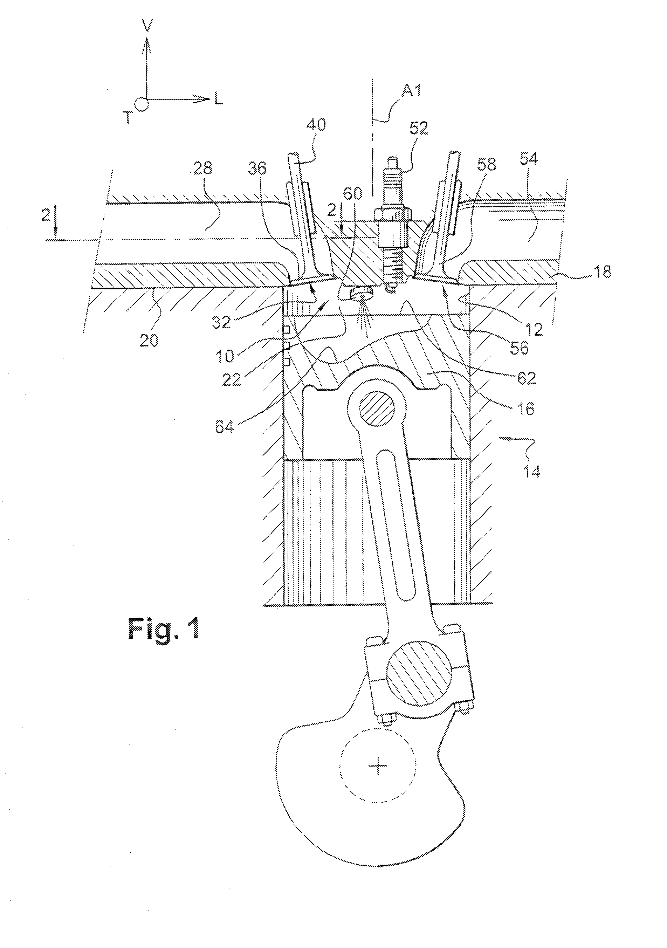

Dans la suite de la description, on adoptera de manière non limitative une orientation longitudinale, verticale et transversale indiquée par le trièdre L, V, T de la figure 1.

Des éléments identiques, similaires ou analogues seront identifiés par les mêmes numéros de référence dans la suite de la description.

Afin de faciliter la compréhension de la description et des revendications, on utilisera une orientation amont, aval correspondant à la direction générale de l'écoulement des gaz dans le système d'admission, de la gauche vers la droite conformément à la figure 1.

La description est faite en référence à un moteur Diesel à injection directe, cependant elle n'est pas limitative. L'invention peut s'appliquer à différents types de moteurs tels qu'un moteur à essence à injection directe.

On a représenté à la figure 1 un cylindre 10 qui est réalisé sous la forme d'un alésage 12 cylindrique d'axe vertical A1 aménagé dans un bloc-moteur 14. Un piston 16 est animé d'un mouvement alternatif axial dans l'alésage 12 et il délimite, vers le bas, le volume du cylindre 10. Le bloc-moteur 14 est recouvert d'une culasse 18 dont une face inférieure 20 délimite le cylindre 10 vers le haut.

L'espace situé entre le piston 16, la culasse 18 et le cylindre 10 est appelé chambre de combustion 22.

La culasse 18 du moteur comporte un premier conduit 26 et un second conduit 28 d'admission des gaz, notamment d'air, dans le cylindre 10. Seul le second conduit 28 est visible à la figure 1.

Chaque conduit d'admission 26, 28 débouche dans la chambre de combustion 22 par un premier et un second orifices circulaires d'admission 30, 32 obturés par une première et une seconde soupapes d'admission 34, 36 respectivement. Les premier et second orifices d'admission 30, 32 sont excentrés par rapport à l'axe A1 du cylindre 10.

Chacune des soupapes d'admission 34, 36 comporte une queue 38, 40 respectivement qui s'étend vers le haut de manière sensiblement verticale dans les conduits d'admission 26, 28 et traverse leur paroi. Les soupapes 34, 36 sont chacune commandées entre une position d'obturation et une position extrême d'ouverture par coulissement selon une direction sensiblement parallèle à celle de l'axe de leur queue respective 38,40.

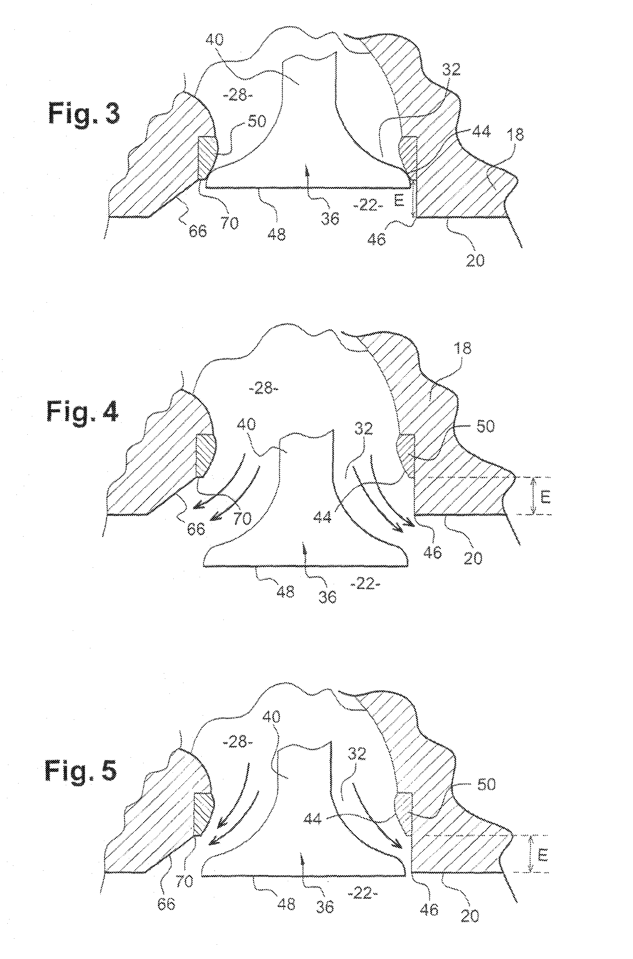

En position d'obturation, les soupapes 34, 36 coopèrent chacune avec un siège de soupape annulaire associé 42, 44, comme représenté à la figure 3 afin d'obturer l'orifice d'admission associé 30, 32. Les sièges de soupapes 42, 44 sont agencés à l'extrémité aval des conduits d'admission 26, 28, en amont du pourtour 46 de l'orifice d'admission 30, 32 de façon qu'il subsiste un espace ou jeu E entre le bord inférieur du siège 42, 44 et le pourtour 46 de l'orifice d'admission 30, 32. L'espace E est ici suffisant pour que la surface inférieure 48 de la soupape 34 ou 36 soit située au-dessus du niveau de la face inférieure 20 de la culasse 18 lorsque la soupape 34 ou 36 est en position d'obturation.

On a représenté à la figure 4 la soupape 36 en position d'ouverture maximale dans laquelle la soupape 36 est soulevée de son siège 44 par coulissement vertical vers le bas de manière à dégager une section de passage pour permettre l'introduction des gaz dans la chambre de combustion 22 à travers l'orifice d'admission 32. La surface inférieure 48 de la soupape 36 est alors située au-dessous du niveau de la face inférieure 20 de la culasse 18.

Avantageusement, le siège de soupape 42 et/ou 44 comporte un bourrelet radial interne 50 de façon à former un étranglement par rapport à la section de passage du conduit d'admission 26, 28 associé. Le flux de gaz est ainsi accéléré lors de son passage à travers le siège 44 en direction de la chambre de combustion 22.

Le cylindre 10 comporte aussi une bougie de préchauffage 52, qui est ici agencée sensiblement selon l'axe A1 du cylindre 10.

Par ailleurs, la culasse 18 comporte ici deux conduits 54 d'échappement des gaz brûlés qui s'ouvrent chacun par un orifice de sortie 56 dans la face inférieure 20 de la culasse 18. Chacun des orifices de sortie 56 du conduit d'échappement 54 est destiné à être obturé par une soupape d'échappement 58 associée.

S'agissant d'un moteur à injection directe, le cylindre 10 comporte aussi un injecteur de carburant dont le nez 60 débouche directement dans la chambre 22.

Comme on peut le voir sur la figure 1, le piston 16 comporte, dans sa face supérieure 62, un évidement concave 64, aussi appelé bol, qui, en vue de dessus, présente un contour sensiblement circulaire.

De manière non limitative, l'évidement 64 peut être excentré par rapport à l'axe A1 du cylindre 10. En effet, il est intéressant que l'injecteur et l'évidement 64 soient agencés de telle sorte que l'axe principal d'injection de carburant par l'injecteur soit orienté de manière à peu près tangentielle à la surface latérale de l'évidement 64, vers l'intérieur de l'évidement 64 et que l'axe de symétrie de l'évidement 64 coïncide avec le nez 60 de l'injecteur dans la chambre de combustion 22.

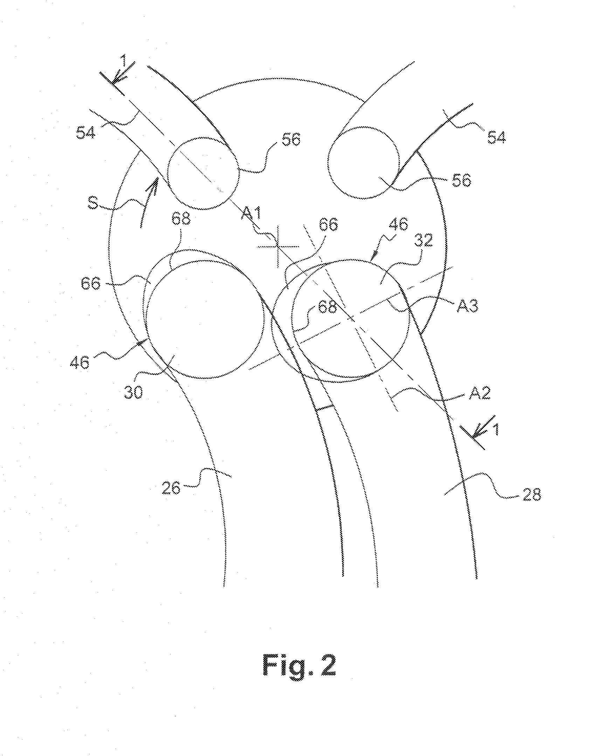

Selon une conception connue, le premier conduit d'admission 26 est conformé pour que le flux de gaz admis à travers l'orifice d'admission 30 forme un mouvement tourbillonnaire autour de l'axe vertical A1 dans la chambre de combustion 22. Par exemple, comme représenté à la figure 2, le premier conduit 26 est orienté selon une direction tangentielle par rapport à la chambre de combustion 22 de façon que les gaz tournent selon un sens horaire autour de l'axe vertical A1 comme indiqué par la flèche S.

Le second conduit d'admission 28 est ici conformé pour que le flux de gaz débouche dans la chambre de combustion 22 selon une direction sensiblement radiale. Cette forme est par exemple contrainte par l'agencement d'éléments périphériques tels que la bougie 35. Ainsi, la projection sur un plan horizontal de la portion du second conduit 28 qui se situe directement en amont du second orifice d'admission 32 est orientée selon une direction sensiblement radiale centripète par rapport à l'axe A1.

Ainsi, le flux de gaz d'admission en sortie du second orifice d'admission 32 est majoritairement orienté radialement en direction de l'axe A1. Ceci a pour effet que ce flux de gaz s'oppose en partie au mouvement tourbillonnaire, et donc réduit la vitesse de rotation des gaz.

Selon les enseignements de l'invention, le système d'admission comporte des moyens pour orienter, selon une direction tangente au mouvement tourbillonnaire, au moins une portion du flux de gaz admis dans la chambre de combustion 22 à travers le second orifice d'admission 32 de manière à renforcer le mouvement tourbillonnaire.

La culasse 18 comporte à cet effet une portion entaillée 66 associée au moins au second conduit d'admission 28, et de préférence aux deux conduits d'admission 26, 28, de manière à modifier l'orientation du flux de gaz en sortie de l'orifice d'admission 30, 32 associé.

Pour simplifier la compréhension de la description et à titre non limitatif, on décrira par la suite l'invention en référence au seul second orifice d'admission 32.

Selon la figure 2, la portion entaillée 66 est réalisée le long d'un secteur angulaire 68 du pourtour 46 du second orifice d'admission 32, et elle s'étend en formant un arc. Le secteur angulaire 68 sur lequel le pourtour 46 est entaillé est ici sensiblement égal à la moitié du pourtour 46 de l'orifice d'admission 32 et il s'étend sur une moitié du pourtour 46 qui est située en aval d'un premier diamètre A2 du second orifice d'admission 32 selon le sens de rotation du mouvement tourbillonnaire, le premier diamètre A2 étant perpendiculaire à l'axe A1.

A la figure 2, en projection verticale sur un plan horizontal, la portion entaillée 66 a la forme d'un croissant qui comporte un axe de symétrie passant par le centre de l'orifice d'admission 32. La direction de cet axe de symétrie est comprise entre le premier diamètre A2 et un second diamètre A3 de l'orifice d'admission 32 qui est orienté tangentiellement au mouvement tourbillonnaire. Dans le mode de réalisation représenté à la figure 2, l'axe de symétrie de la portion entaillée 66 est plus proche du second diamètre A3 que du premier diamètre A2.

En section verticale, la portion entaillée 66 est en forme de rampe comme on peut le voir à la figure 3, de hauteur décroissante en s'éloignant de l'orifice d'admission 32 associé, de manière à favoriser le mouvement tourbillonnaire. La partie haute de la rampe est ici située à la même altitude que le bord inférieur 70 du siège de soupape 44.

En outre, le degré d'ouverture extrême de la soupape 36 associé au second orifice d'admission 32 comportant la portion entaillée 66 est susceptible de varier, c'est-à-dire que la soupape 36 est susceptible d'être commandée vers une position d'ouverture partielle en fonction de paramètres de fonctionnement du moteur. On dit aussi que la soupape 36 a une loi de levée variable. Ainsi, la longueur de la course de coulissement verticale de la soupape 36 depuis sa position d'obturation vers sa position d'ouverture partielle est inférieure à la course de coulissement de la soupape vers sa position extrême d'ouverture maximale. Dans ce mode de fonctionnement, la soupape 36 n'est pas commandée au-delà de sa position d'ouverture partielle, c'est-à-dire qu'elle est commandée vers sa position d'obturation après avoir atteint sa position d'ouverture partielle.

On a représenté à la figure 4 la soupape 36 dans une position extrême d'ouverture maximale dite de forte levée, c'est-à-dire que la soupape 36 a un degré d'ouverture maximum. La soupape 36 est soulevée de son siège 44 d'une distance telle que l'aire de la section de passage dégagée par la soupape 36 est maximale.

La présence de la portion entaillée 66 n'influence alors que de façon marginale le flux de gaz admis dans la chambre de combustion 22. Le débit de gaz admis dans la chambre de combustion 22 est optimal, en revanche le mouvement tourbillonnaire n'est pas très intense car une portion non négligeable des gaz admis à travers le second orifice d'admission 32 tourne dans un sens anti-horaire contraire à celui du mouvement tourbillonnaire S.

Un tel fonctionnement de la soupape 36 en position de d'ouverture maximale est généralement associé à une forte charge du moteur pour laquelle on privilégie une bonne perméabilité du cylindre 10 par rapport au swirl.

A la figure 5, on a représenté la soupape 36 dans une position d'ouverture partielle dite de faible levée, c'est-à-dire que la soupape 36 a un faible degré d'ouverture. La surface inférieure 48 de la soupape 36 affleure ici sensiblement à la face inférieure 20 de la culasse 18. Une section de passage est dégagée par la soupape 36 entre la portion entaillée 66 et la soupape 36 tandis que, le long du reste du pourtour 46 de l'orifice d'admission 32, l'aire de la section de passage dégagée est négligeable. Ainsi, le flux de gaz entrant est majoritairement orienté selon le sens de rotation du mouvement tourbillonnaire.

Il en résulte que l'orientation du flux de gaz en sortie du conduit d'admission 28 associé est modifiée de manière à favoriser la composante tangentielle au mouvement tourbillonnaire par rapport à la composante radiale, c'est-à-dire de manière à augmenter le swirl. Ainsi, sur une première partie de la course d'ouverture de la seconde soupape 36, la portion du flux de gaz orientée tangentiellement est proportionnelle au degré d'ouverture de la seconde soupape 36.

En revanche la perméabilité effective du cylindre 10 est faible par rapport à la perméabilité potentielle du cylindre 10, c'est-à-dire la perméabilité du cylindre 10 lorsque la soupape 36 est suffisamment levée pour dégager totalement la section de passage des orifices d'admission 30, 32.

Avantageusement, le premier orifice d'admission 30 est situé en aval du second orifice d'admission 32 selon le sens de rotation du mouvement tourbillonnaire des gaz. Ainsi, le mouvement tourbillonnaire peut se former dans la chambre de combustion 22 sans être sensiblement perturbé par la portion minoritaire du flux de gaz qui est admise à travers le second orifice d'admission 32 selon une orientation contraire au sens de rotation du mouvement tourbillonnaire.

Comme représenté à la figure 2, le premier orifice d'admission 30 est aussi susceptible d'être muni d'une portion entaillée 66 selon l'invention. La soupape 34 associée est alors aussi commandée selon une loi de levée variable de manière synchrone ou indépendante par rapport à la soupape 36 associée au second orifice 32.

Selon une variante non représentée de l'invention, la soupape 34 et/ou 36 est susceptible d'occuper plus de deux degrés d'ouverture extrême, en plus de la position d'ouverture maximale et de la position d'ouverture partielle.

## Revendications

1. Système d'admission de gaz dans une chambre de combustion (22) cylindrique d'axe (A1) d'un moteur à combustion, qui comporte un premier conduit (26) d'admission des gaz qui débouche dans la chambre de combustion (22) par un premier orifice d'admission (30) excentré par rapport à l'axe (A1) de sorte que le flux de gaz admis forme un mouvement tourbillonnaire (S) autour de l'axe (A1) de la chambre de combustion (22), qui comporte un second conduit d'admission (28) qui débouche dans la chambre de combustion (22) à travers un second orifice d'admission (32) excentré de sorte que le flux de gaz débouche selon une direction sensiblement radiale dans la chambre de combustion (22), chacun des premier (30) et second (32) orifices d'admission étant susceptibles d'être obturés par une première (34) et une seconde (36) soupapes,
**caractérisé en ce que** le degré d'ouverture d'au moins une soupape (36) est commandé en fonction de paramètres de fonctionnement du moteur, et **en ce que** le pourtour (46) de l'orifice d'admission (32) associé à ladite soupape (36) comporte un secteur angulaire entaillé (66) qui s'étend sur un arc selon la direction tangente au mouvement tourbillonnaire (S) de manière que ladite portion du flux de gaz soit orientée tangentiellement au mouvement tourbillonnaire (S).

2. Système selon la revendication 1, **caractérisé en ce qu'**au moins sur une première partie de fa course d'ouverture de la seconde soupape (36), la portion du flux de gaz orientée tangentiellement est inversement proportionnelle au degré d'ouverture extrême de celle-ci.

3. Système selon la revendication 1 ou 2, **caractérisé en ce que** le premier orifice d'admission (30) est situé en aval du second orifice d'admission (32) selon le sens de rotation (S) du mouvement tourbillonnaire des gaz.

4. Système selon la revendication 1, 2 ou 3, **caractérisé en ce que** le degré d'ouverture de la première soupape (34) est commandé en fonction de paramètres de fonctionnement du moteur, et **en ce que** le pourtour (46) du premier orifice d'admission (30) comporte un secteur angulaire entaillé (66) qui s'étend sur un arc d'axe de symétrie orienté selon une direction comprise entre une direction tangente au mouvement tourbillonnaire (S) et une direction centripète dirigée vers l'axe (A1) du cylindre.

5. Système selon la revendication 4, **caractérisé en ce que** le secteur angulaire (68) sur lequel le pourtour (46) du premier orifice d'admission (30) est entaillé est sensiblement égal à la moitié du pourtour (46) dudit orifice (30).

6. Système selon l'une quelconque des revendications précédentes, **caractérisé en ce que** le secteur angulaire (68) sur lequel le pourtour (46) du second orifice d'admission (32) est entaillé est sensiblement égal à la moitié du pourtour (46) dudit orifice (32).
